# EUROPEAN PATENT APPLICATION

(11) **EP 4 276 158 A1**
(43) Date of publication of application: **15.11.2023**
(21) Application number: 22890252.4
(22) Date of filing: 25.10.2022
(51) Int. Cl.: C09J 133/04, C09J 7/20, C09J 7/30, G02B 5/30, G02F 1/1335

(54) **UV-CURABLE ADHESIVE AGENT COMPOSITION, ADHESIVE FILM INCLUDING SAME, POLARIZATION FILM INCLUDING SAME, AND DISPLAY DEVICE INCLUDING POLARIZATION FILM**

(30) Priority: 05.11.2021 KR 20210151166
(71) Applicant: Lg Chem, Ltd., Seoul 07336 (KR)
(72) Inventor: CHOI, Su Youn, Daejeon 34122 (KR); KWON, Yoonkyung, Daejeon 34122 (KR)
(74) Representative: Plasseraud IP
(86) International application number: PCT/KR2022/016325
(87) International publication number: WO 2023/080517

(57) **Abstract**

The present invention relates to a UV curing adhesive composition, an adhesive film comprising the same, a polarizing film comprising the same, and a display device comprising polarizing film.

## Description

### [Technical Field]

This application claims priority to and the benefit of Korean Patent Application No. 10-2021-0151166 filed in the Korean Intellectual Property Office on November 5, 2021, the entire contents of which are incorporated herein by reference.

The present invention relates to a UV curing adhesive composition, an adhesive film comprising the same, a polarizing film comprising the same, and a display device comprising polarizing film.

### [Background Art]

Recently, with the development of optical technology as a stepping stone, various types of display devices, such as a plasma display panel (PDP), a liquid crystal display (LCD), an organic light emitting diodes (OLED), etc., have been proposed and marketed instead of conventional cathode ray tubes. Recently, the characteristics required for these display devices are becoming more advanced, and accordingly, demand characteristics for peripheral components such as optical films and polarizing films applied to the display devices are also becoming more advanced.

The liquid crystal display has been used in various display devices, such as TVs, mobile phones, car navigation systems, portable game devices, and other portable terminals by taking advantage of features, such as low power consumption, low voltage operation, light weight and thinness. These liquid crystal displays may include a vertical alignment (VA) mode, an in-plane switching (IPS) mode, a fringe field switching (FFS) mode, and an optical compensated bend (OCB) mode. These liquid crystal displays are generally configured by a backlight, a liquid crystal cell containing liquid crystal molecules sandwiched between two electrodes, and two polarizing plates provided on both sides of the liquid crystal cell, respectively, and may control transmitted light by a change in optical refractive index of liquid crystal molecules when applying voltages and display an image. In addition, in these modes, light absorption axes of the two polarizing films are disposed at 90° to each other, so that light is not transmitted when no voltage is applied to the liquid crystal cell (when no voltage is applied). A liquid crystal display that displays black when no voltage is applied and displays white when the voltage is applied is called a normal black type.

Recently, in the polarizing plate market, efforts have been made to minimize defects and increase product productivity. In the related art, the polarizing plate has been manufactured with a water-based adhesive using triacetyl cellulose (TAC), a moisture-permeable substrate (WVRT > 200 g/m² Day), as a protective material for the polarizing plate, but currently, a moisture-impermeable substrate (WVRT < 200 g/m² Day) such as a PET, acrylic, or COP film has also been mainly used.

When using a conventional moisture-permeable protective substrate, upper/lower protective substrates of the polarizing plate can be attached with one type of adhesive, but in recent years, in a product group using both the moisture-permeable substrate and the moisture-impermeable substrate, rather than using only the moisture-permeable substrate alone, there is a problem in that it is difficult to implement sufficient adhesive strength with a water-based adhesive by using only one adhesive.

That is, an adhesive composition having good adhesive strength to a moisture-permeable protective substrate is disadvantageous in adhesive strength to the moisture-impermeable substrate, and an adhesive composition having good adhesive strength to a moisture-impermeable protective substrate is disadvantageous in adhesive strength to the moisture-permeable substrate. Accordingly, as the characteristics of the current substrate are applied in various ways, the adhesive has also no option to vary depending on the substrate, so that it is necessary to study an adhesive that can be applied to both moisture-permeable and moisture-impermeable substrates by improving the adhesive strength margin of the adhesive.

Currently, in order to solve this problem, it is common to use the adhesive applied to the polarizing plate separately on the upper and lower surfaces according to the moisture-permeable and moisture-impermeable substrates. However, there is an advantage in that the adhesive strength is improved when the adhesive is used separately for the moisture-permeable substrate and the moisture-impermeable substrate, but there is a problem that the adhesive needs to be replaced every time depending on a product group, and the cost increase and product productivity decrease due to the replacement of the adhesive.

When the adhesive applied to the polarizing film is replaced once, immobility generally occurs for about 3 to 6 hours, and thus, additional time is incurred for a path change due to a wet/dry change, adhesive discharge/filling, mesh roll replacement, piping cleaning/washing, etc.

Therefore, it is necessary to develop an adhesive layer applied to the polarizing plate that may be used regardless of a type of protective substrate (moisture-permeable substrate and moisture-impermeable substrate) attached to the polarizing plate according to a currently applied product group.

### [Prior Arts]

Japanese Patent Registration No. 6536022

### [Disclosure]

### [Technical Problem]

The present invention relates to a UV curing adhesive composition, an adhesive film comprising the same, a polarizing film comprising the same, and a display device comprising polarizing film.

### [Technical Solution]

According to an exemplary embodiment of the present invention, there is provided a UV curing adhesive composition including a monofunctional acrylate; polyfunctional acrylate; a silane coupling agent; a cationic initiator; and a photosensitizer, in which based on 100 parts by weight of a monomer including the monofunctional acrylate; the polyfunctional acrylate; and the silane coupling agent, the silane coupling agent is included in an amount of 15 parts by weight or more, and the polyfunctional acrylate includes acrylate having two functional groups; and acrylate having three or more functional groups, in which based on 100 parts by weight of the polyfunctional acrylate, the acrylate having two functional groups is included in an amount of 70 parts by weight or more, the silane coupling agent has one or more epoxy groups in a molecule, in which at least one of the epoxy groups is an alicyclic epoxy group; or a non-alicyclic epoxy group.

According to another exemplary embodiment of the present invention, there is provided an adhesive film including the UV curing adhesive composition according to the present invention or a cured product thereof.

According to yet another exemplary embodiment, there is provided a polarizing film including a polarizer; a first adhesive layer and a second adhesive layer provided on both surfaces of the polarizer; a transparent protective film provided on an opposite surface to a surface in contact with the polarizer of the first adhesive layer and having moisture permeability of 150 g/m²•24h or less; and a transparent protective film provided on an opposite surface to a surface in contact with the polarizer of the second adhesive layer and having moisture permeability of 150 g/m²•24h or more, in which the first adhesive layer and the second adhesive layer are the adhesive films according to the present invention.

Finally, there is provided a display device including the polarizing film according to the present invention.

### [Advantageous Effects]

According to the exemplary embodiment of the present invention, the UV curing adhesive composition necessarily includes monofunctional acrylate; polyfunctional acrylate; a silane coupling agent; a cationic initiator; and a photosensitizer. Particularly, based on 100 parts by weight of the monomer, the silane coupling agent is included in an amount of 15 parts by weight or more, the silane coupling agent has one or more epoxy groups in a molecule, and at least one of the epoxy groups includes an alicyclic epoxy group; or a non-alicyclic epoxy group to exhibit excellent adhesive strength regardless of a moisture-permeable or moisture-impermeable substrate to be attached.

Moreover, as the included polyfunctional acrylate includes two types of acrylates, and acrylate having two functional groups thereof includes a specific content and a specific functional group, thereby improving a wetting property of the polarizing plate or substrate and having excellent adhesive strength regardless of a protective substrate used.

In addition, the UV curing adhesive composition according to the exemplary embodiment of the present invention includes monofunctional acrylate and polyfunctional acrylate at a specific content to lower the surface energy of an adhesive layer including the composition and have an excellent wetting property on the polarizing plate or substrate without causing bubbles in the process, thereby having excellent appearance quality of the polarizing film including the composition.

### [Description of Drawings]

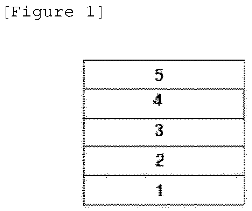

FIG. 1 illustrates a stacked structure of a polarizing film according to an exemplary embodiment of the present invention.

### <Explanation of Reference Numerals and Symbols>

1: Transparent protective film with moisture permeability of 150 g/m²•24 h or more
2: Second adhesive layer
3: Polarizer
4: First adhesive layer
5: Transparent protective film with moisture permeability of 150 g/m²•24 h or less

### [Best Mode]

Before describing the present invention, some terms are first defined.

In the present specification, unless explicitly described to the contrary, the word "comprise" and variations such as "comprises" or "comprising", will be understood to imply the inclusion of stated elements but not the exclusion of any other elements.

In this specification, `p to q' means a range of `p or more and q or less'.

In the present specification, acrylate means including both acrylate and (meth)acrylate. Hereinafter, Examples of the present invention will be described in detail so as to easily implement those skilled in the art. However, the present invention may be implemented in various different forms and is not limited to the embodiments described herein.

An exemplary embodiment of the present invention provides a UV curing adhesive composition including monofunctional acrylate; polyfunctional acrylate; a silane coupling agent; a cationic initiator; and a photosensitizer. Based on 100 parts by weight of a monomer including the monofunctional acrylate; the polyfunctional acrylate; and the silane coupling agent, the silane coupling agent is included in an amount of 15 parts by weight or more, and the polyfunctional acrylate includes acrylate having two functional groups; and acrylate having three or more functional groups. In addition, based on 100 parts by weight of the polyfunctional acrylate, the acrylate having two functional groups is included in an amount of 70 parts by weight or more, the silane coupling agent has one or more epoxy groups in a molecule, and at least one of the epoxy groups is an alicyclic epoxy group; or a non-alicyclic epoxy group.

According to the exemplary embodiment of the present invention, the UV curing adhesive composition necessarily includes monofunctional acrylate; polyfunctional acrylate; a silane coupling agent; a cationic initiator; and a photosensitizer. Particularly, based on 100 parts by weight of the monomer, the silane coupling agent is included in an amount of 15 parts by weight or more, the silane coupling agent has one or more epoxy groups in a molecule, and at least one of the epoxy groups includes an alicyclic epoxy group; or a non-alicyclic epoxy group to exhibit excellent adhesive strength regardless of a moisture-permeable or moisture-impermeable substrate to be attached.

Each feature of the adhesive composition included in the present invention will be described below.

In an exemplary embodiment of the present invention, the monofunctional acrylate may be alkyl (meth) acrylate. In the alkyl (meth)acrylate, the alkyl group may be branched even in a straight chain as long as the alkyl group has 3 or more carbon atoms. Specific examples of the alkyl (meth)acrylate include methyl (meth)acrylate, ethyl (meth)acrylate, isopropyl (meth)acrylate, butyl (meth)acrylate, isobutyl (meth)acrylate, tert-butyl (meth)acrylate, etc. In addition, as a monopolymerizable monomer, alkyl (meth)acrylate having more carbon atoms in the alkyl group, such as 2-ethylhexyl (meth)acrylate; aralkyl (meth)acrylate such as benzyl (meth)acrylate; (meth)acrylate of terpene alcohol such as isobornyl (meth)acrylate; (meth)acrylate having a tetrahydrofurfuryl structure such as tetrahydrofurfuryl (meth)acrylate; (meth)acrylate having a cycloalkyl group at an alkyl group moiety such as cyclohexylmethyl methacrylate, dicyclopentanyl acrylate, and 1,4-cyclohexanedimethanol monoacrylate; aminoalkyl (meth)acrylate such as N,N-dimethylaminoethyl (meth)acrylate; and (meth)acrylate having an ether bond at an alcohol moiety, such as 2-phenoxyethyl (meth)acrylate, ethyl carbitol (meth)acrylate, and phenoxypolyethylene glycol (meth)acrylate may be used.

In addition, monofunctional (meth)acrylate having a hydroxyl group at the alcohol moiety or monofunctional (meth)acrylate having a carboxyl group at the alcohol moiety may also be used. Specific examples of the monofunctional (meth)acrylate having a hydroxyl group at the alcohol moiety include 2-hydroxyethyl (meth)acrylate, 2- or 3-hydroxypropyl (meth)acrylate, 4-hydroxybutyl (meta)acrylate, 2-hydroxy-3-phenoxypropyl (meth)acrylate, trimethylolpropane mono(meth)acrylate, and pentaerythritol mono(meth)acrylate. Specific examples of the monofunctional (meth)acrylate having a carboxyl group at the alcohol moiety include 2-carboxyethyl (meth)acrylate, 1-[2-(meth)acryloyloxyethyl]phthalate, 1-[2-(meta)acryloyloxyethyl] hexahydrophthalic acid, 1-[2-(meta)acryloyloxyethyl]succinic acid, 4-[2-(meta)acryloyloxyethyl]trimellitic acid, and the like.

In another exemplary embodiment, the monofunctional acrylate may be 4-hydroxybutyl acrylate (4-HBA).

The monofunctional acrylate means acrylate having one functional group in a molecule, and the functional group may be an acrylate group.

In an exemplary embodiment of the present invention, the monofunctional acrylate may be used with one type.

In an exemplary embodiment of the present invention, the monofunctional acrylate may be used with two types.

In an exemplary embodiment of the present invention, the polyfunctional acrylate means acrylate having two or more functional groups in a molecule, and the functional group may be an acrylate group.

In an exemplary embodiment of the present invention, the number of functional groups of the polyfunctional acrylate may be 2 or more and 10 or less, preferably 2 or more and 6 or less, more preferably 2 or more and 5 or less.

The polyfunctional acrylate may be separately expressed as bifunctional acrylate having two functional groups, and trifunctional acrylate having three functional groups, respectively.

In an exemplary embodiment of the present invention, representative examples of the bifunctional acrylate may include alkylene glycol di(meth)acrylates, polyoxyalkylene glycol di(meth)acrylates, di(meth)acrylates of halogen-substituted alkylene glycol, di(meth)acrylates of aliphatic polyol, di(meth)acrylates of hydrogenated dicyclopentadiene or tricyclodecane dialkanol, di(meth)acrylates of dioxane glycol or dioxane dialkanol, di(meth)acrylates of alkylene oxide adducts of bisphenol A or bisphenol F, epoxy di(meth)acrylates of bisphenol A or bisphenol F, and the like.

In an exemplary embodiment of the present invention, more specific examples of the bifunctional acrylate include ethylene glycol di(meth)acrylate, 1,3-butanediol (meth)acrylate, 1,4-butanediol (meth)acrylate, 1,6-hexanediol di(meth)acrylate, 1,9-nonanediol di(meth)acrylate, neopentyl glycol di(meth)acrylate, trimethylolpropane di(meth)acrylate, pentaerythritol di(meth)acrylate, ditrimethylolpropane di(meth)acrylate, diethylene glycol di(meth)acrylate, triethylene glycol di(meth)acrylate, dipropylene glycol di(meth)acrylate, tripropylene glycol di(meth)acrylate, polyethylene glycol di(meth)acrylate, polypropylene glycol di(meth)acrylate, polytetramethylene glycol di(meth)acrylate, di(meth)acrylate of hydroxypivaric acid neopentyl glycol ester, 2,2-bis[4-{2-(2-(meta)acryloyloxyethoxy)ethoxy}phenyl]propane, 2,2-bis[4-{2-(2-(meth)acryloyloxyethoxy)ethoxy}cyclohexyl]propane, hydrogenated dicyclopentadienyl di(meth)acrylate, tricyclodecanedimethanol di(meth)acrylate, 1,3-dioxane-2,5-diyl di(meth)acrylate [nickname: dioxane glycol di(meta)acrylate], di(meth)acrylate of acetal product of hydroxypivalaldehyde and trimethylolpropane [chemical name: 2-(2-hydroxy-1,1-dimethylethyl)-5-ethyl-5-hydroxymethyl-1,3-dioxane], di(meth)acrylate of 1,3,5-tris(2-hydroxyethyl) isocyanurate, and the like.

In an exemplary embodiment of the present invention, a representative example of the polyfunctional acrylate having at least trifunctional groups is poly(meth)acrylate of at least tri-valent aliphatic polyol. Specific examples thereof include glycerin tri(meth)acrylate, trimethylolpropane tri(meth)acrylate, ditrimethylolpropane tri(meth)acrylate, ditrimethylolpropane tetra(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, glycerin ethylene oxide modified tri(meth)acrylate, ethylene oxide-modified trimethylolpropane tri(meth)acrylate, and the like.

Meanwhile, acrylate oligomers include urethane (meth)acrylate oligomers, polyester (meth)acrylate oligomers, epoxy (meth)acrylate oligomers, and the like. In an exemplary embodiment of the present invention, the polyfunctional acrylate may be hydroxypivalic acid neopentylglycol diacrylate; or tris(2-hydroxy ethyl) isocyanurate triacrylate.

In an exemplary embodiment of the present invention, the polyfunctional acrylate may be used with two types. In an exemplary embodiment of the present invention, there is provided the UV curing adhesive composition in which the polyfunctional acrylate includes acrylate having two functional groups; and acrylate having three or more functional groups, and 70 parts by weight or more of the acrylate having two functional groups is included based on 100 parts by weight of the polyfunctional acrylate.

In yet another exemplary embodiment of the present invention, the polyfunctional acrylate includes acrylate having two functional groups; and acrylate having three or more functional groups, and based on 100 parts by weight of the polyfunctional acrylate, the acrylate having two functional groups may be included in an amount of 70 parts by weight or more, preferably 70.5 parts by weight or more, more preferably 71 parts by weight or more, and 90 parts by weight or less, preferably 85 parts by weight or less, more preferably 80 parts by weight or less, and most preferably less than 80 parts by weight.

In another exemplary embodiment, the polyfunctional acrylate includes acrylate having two functional groups; and acrylate having three or more functional groups, and 70 parts by weight or more and 80 parts by weight or less of the acrylate having two functional groups may be included based on 100 parts by weight of the polyfunctional acrylate.

In an exemplary embodiment of the present invention, there is provided the UV curing adhesive composition in which the acrylate having two functional groups includes a hydroxypivalic acid group.

The polyfunctional acrylate included in the UV curing adhesive composition according to the present invention includes two types of acrylates, and acrylate having two functional groups thereof includes the content and a specific functional group, thereby improving a wetting property of the polarizing plate or substrate and having excellent adhesive strength regardless of a protective substrate used.

In an exemplary embodiment of the present invention, the monomer may include monofunctional acrylate; polyfunctional acrylate; and a silane coupling agent, and may include other additives.

In an exemplary embodiment of the present invention, there is provided the UV curing adhesive composition which includes 1 part by weight or more and 30 parts by weight or less of the monofunctional acrylate and 40 parts by weight or more and 90 parts by weight or less of the polyfunctional acrylate based on 100 parts by weight of the monomer.

In another embodiment of the present invention, based on 100 parts by weight of the monomer, the monofunctional acrylate may satisfy 1 part by weight or more and 30 parts by weight or less, preferably 5 parts by weight or more and 30 parts by weight or less, more preferably 10 parts by weight or more and 30 parts by weight or less.

In yet another exemplary embodiment, based on 100 parts by weight of the monomer, the polyfunctional acrylate may satisfy 40 parts by weight or more and 90 parts by weight or less, preferably 45 parts by weight or more and 90 parts by weight or less, more preferably 45 parts by weight or more and 85 parts by weight or less.

As such, as the monofunctional acrylate and the polyfunctional acrylate are included in the range in the UV curing adhesive composition, even if the moisture-permeable substrate or the moisture-impermeable substrate is stacked on both surfaces of the polarizing plate, it is characterized to have excellent adhesive strength without deteriorating the adhesive strength and further an excellent wetting property of the substrate in the adhesive composition after moisture permeation.

In an exemplary embodiment of the present invention, the UV curing adhesive composition may include a silane coupling agent.

In an exemplary embodiment of the present invention, the silane coupling agent has one or more epoxy groups in a molecule, and at least one of the epoxy groups may be an alicyclic epoxy group; or a non-alicyclic epoxy group.

In another exemplary embodiment of the present invention, the silane coupling agent has one or more epoxy groups in a molecule, and at least one of the epoxy groups may be an alicyclic epoxy group.

In yet another exemplary embodiment of the present invention, the silane coupling agent has one or more epoxy groups in a molecule, and at least one of the epoxy groups may be a non-alicyclic epoxy group.

In yet another exemplary embodiment, the silane coupling agent has one epoxy group in a molecule, and the epoxy group may be a non-alicyclic epoxy group.

In yet another exemplary embodiment, the silane coupling agent has one epoxy group in a molecule, and the epoxy group may be an alicyclic epoxy group.

In particular, in an exemplary embodiment of the present invention, the silane coupling agent has one epoxy group in the molecule, and when the epoxy group is a non-alicyclic epoxy group, there is no significant change in adhesive properties compared to the case of having the alicyclic epoxy group, but may have very excellent characteristics in initial feasibility evaluation, compared to the case of using an alicyclic epoxy group.

In an exemplary embodiment of the present invention, the silane coupling agent is not limited thereto as long as a silane coupling agent having an epoxy group is used, but may specifically be 3-glycidoxypropyl trimethoxysilane.

The present invention is characterized in that the UV curing adhesive composition includes a silane coupling agent having at least one epoxy group, and in particular, 15 parts by weight or more of the silane coupling agent is included based on 100 parts by weight of the monomer.

In another exemplary embodiment, based on 100 parts by weight of the monomer, the silane coupling agent may be included in an amount of 15 parts by weight or more, 50 parts by weight or less, preferably 45 parts by weight or less, more preferably 35 parts by weight or less, most preferably 30 parts by weight or less.

In the present invention, in the UV curing adhesive composition, it is mainly characterized that the silane coupling agent having at least one epoxy group is included in the content part while the polyfunctional and monofunctional acrylates are included in a specific content, so that a large content thereof is included compared to being applied in the form of additives to a generally used adhesive layer.

The silane coupling agent according to the present invention serves as an additive for increasing the adhesive strength of the composition, in addition to a role of a general coupling agent, and it was confirmed that the silane coupling agent is included in an amount of at least 15 parts by weight or more based on 100 parts by weight of the monomer to have a good effect of the adhesive layer according to the present invention.

That is, as the silane coupling agent according to the present invention includes the content part, even when various types of protective substrates such as moisture permeable/moisture-impermeable, moisture permeable/moisture permeable, and moisture-impermeable/moisture-impermeable are used on the upper and lower portions of the polarizing plate, the adhesive strength is excellent, and the wetting property in the polarizing plate is excellent, so that the appearance of the polarizing film is excellent.

In an exemplary embodiment of the present invention, the UV curing adhesive composition may include a cationic initiator; and a photosensitizer.

In the present invention, the cationic initiator may be any cationic initiator which may initiate polymerization of a polymerizable monomer and polymerizable polyfunctional acrylate by irradiation of ultraviolet light, and conventionally known cationic initiators may be used. Specific examples of a photo radical polymerization initiator include acetophenone-based initiators such as acetophenone, 3-methylacetophenone, benzyldimethylketal, 1-(4-isopropylphenyl)-2-hydroxy-2-methylpropan-1-one, 2-methyl-1-[4-(methylthio)phenyl-2-morpholino propan-1-one and 2-hydroxy-2-methyl-1-phenylpropan-1-one; benzophenone-based initiators such as benzophenone, 4-chlorobenzophenone and 4,4'-diaminobenzophenone; benzoin ether-based initiators such as benzoin propyl ether and benzoin ethyl ether; thioxanthone-based initiators such as 4-isopropylthioxanthone; other xanthone, fluorenone, camphorquinone, benzaldehyde, and anthraquinone, and the like.

In an exemplary embodiment of the present invention, the cationic initiator refers to a compound that initiates a cationic polymerization reaction by acting on a cationic polymerizable group such as an epoxy group, as a compound that generates a cationic species or Lewis acid by irradiation of active energy rays such as ultraviolet rays.

In an exemplary embodiment of the present invention, the cationic initiator may include a sulfonium salt or an iodonium salt.

In an exemplary embodiment of the present invention, the cationic initiator is to enhance a curing rate by promoting polymerization, and as the cationic polymerization initiator, a cationic initiator generally used in the art may be used without limitation.

In addition, in an exemplary embodiment of the present invention, the reactivity of radical polymerization may be improved and the mechanical strength or adhesive strength of the adhesive layer may be improved by mixing the photosensitizer. The photosensitizer may be a compound having maximum absorption at a wavelength longer than 380 nm, and examples thereof include carbonyl compounds, organic sulfur compounds, persulfides, redox compounds, azo and diazo compounds, halogen compounds, anthracene compounds, photoreducing pigments, etc.

In an exemplary embodiment of the present invention, there is provided the UV curing adhesive composition in which based on 100 parts by weigh of the UV curing adhesive composition, the cationic initiator is included in an amount of 0.1 part by weight or more and 5 parts by weight or less and the photosensitizer is included in an amount of 0.1 part by weight or more and 5 parts by weight or less.

In another embodiment of the present invention, based on 100 parts by weight of the UV curing adhesive composition, the cationic initiator may be included in an amount of 0.1 parts by weight or more and 5 parts by weight or less, preferably 1 part by weight or more and 3 parts by weight or less, more preferably 1.5 parts by weight or more and 2.5 parts by weight or less.

In yet another embodiment of the present invention, based on 100 parts by weight of the UV curing adhesive composition, the photosensitizer may be included in an amount of 0.1 parts by weight or more and 5 parts by weight or less, preferably 1 part by weight or more and 3 parts by weight or less, more preferably 1.5 parts by weight or more and 2.5 parts by weight or less.

In particular, the UV curing adhesive composition according to the present invention includes the cationic initiator in the part by weight as described above, and the present invention is characterized in that a radical monomer is used as a main material, but the cationic initiator is used instead of a radical initiator. That is, when the radical initiator is included in the UV curing adhesive composition according to the present invention, as in the present invention, both the moisture-permeable substrate and the moisture-impermeable substrate do not have good adhesive strength, but the adhesive strength is reduced. The UV curing adhesive composition according to the present invention has the composition to exhibit excellent adhesive strength regardless of the substrate.

There is provided an adhesive film comprising the UV curing adhesive composition according to the present invention or a cured product thereof.

The preparing method of the adhesive composition for the polarizing plate according to the present invention is not particularly limited, and can be obtained by mixing the components. An organic solvent may also be appropriately used for viscosity adjustment. There is no particular restriction even on the mixing method, and the components are sufficiently stirred and mixed until becoming uniform in a liquid at room temperature (20°C or more and 25°C or less) in a room shielded from UV light so that curing does not proceed.

When applying the adhesive composition for the polarizing plate, the adhesive composition may be coated on any one or both of a transparent protective film and a polarizer.

The adhesive film may be stacked on a base film during manufacturing.

In an exemplary embodiment of the present invention, the adhesive film may include the adhesive composition according to an exemplary embodiment of the present invention as it is.

In an exemplary embodiment of the present invention, the adhesive film may include a curing product of the adhesive composition according to an exemplary embodiment of the present invention.

In an exemplary embodiment of the present invention, the base film may be selected from the group consisting of polyethylene terephthalate (PET), polyester, polycarbonate (PC), polyimide (PI), polyethylene naphthalate (PEN), polyether ether ketone (PEEK), polyarylate (PAR), polycycloolefin (PCO), polynorbornene, polyethersulphone (PES) and cycloolefin polymer (COP).

In another exemplary embodiment, the base film may be polyethylene terephthalate (PET).

In an exemplary embodiment of the present invention, the thickness of the base film may be 10 µm or more and 200 µm or less, preferably 15 µm or more and 100 µm or less, more preferably 20 µm or more and 75 µm or less.

In addition, the base film is preferably transparent. Here, the meaning that the base film is transparent indicates that the light transmittance of visible light (400 to 700 nm) is 80% or more.

In an exemplary embodiment of the present invention, there is provided an adhesive film further comprising a release film on one surface or both surfaces of the adhesive film.

In an exemplary embodiment of the present invention, the thickness of the adhesive film may be 0.1 µm or more and 300 µm or less.

In another exemplary embodiment of the present invention, the thickness of the adhesive film may be 0.1 µm or more and 100 µm or less, 0.1 µm or more and 80 µm or less, and 0.1 µm or more and 50 µm or less.

In an exemplary embodiment of the present invention, the thickness of the adhesive film may be more than 0 µm and 20 µm or less, more than 0 µm and 10 µm or less, preferably 0.1 µm to 10 µm, or about 0.1 µm to 5 µm. When the thickness of the adhesive film satisfies the above range, the uniformity and adhesive strength of the adhesive film are excellent, and the appearance wrinkles of the polarizing plate may be prevented.

The thickness of the adhesive film is not particularly limited even in the method of applying a solid adhesive composition in the adhesive film solution, and various means such as a method of directly dropping the adhesive composition, a roll coating method, a spray method, and a dipping method may be applied.

In an exemplary embodiment of the present invention, the adhesive film may have surface energy of 35 mN/m or less.

In an exemplary embodiment of the present invention, the adhesive film may have a surface water contact angle of 70° or more.

In an exemplary embodiment of the present invention, the adhesive film may have the surface energy of 35 mN/m or less, 30 mN/m or less, and 25 mN/m or less, and may satisfy a surface energy range of 5 mN/m or more.

In an exemplary embodiment of the present invention, the adhesive film may have the surface water contact angle of 70° or more, 100° or more, and 110° or more, and may satisfy a surface water contact angle range of 180° or less.

The adhesive film according to an exemplary embodiment of the present invention satisfies the surface water contact angle and the surface energy, and satisfies the above range as the UV curing adhesive composition includes the monofunctional and polyfunctional acrylates at specific composition and content to have excellent a wetting property with the substrate.

In yet another exemplary embodiment, there is provided a polarizing film comprising a polarizer; a first adhesive layer and a second adhesive layer provided on both surfaces of the polarizer; a transparent protective film provided on an opposite surface to a surface in contact with the polarizer of the first adhesive layer and having moisture permeability of 150 g/m²•24h or less; and a transparent protective film provided on an opposite surface to a surface in contact with the polarizer of the second adhesive layer and having moisture permeability of 150 g/m²•24h or more, in which the first adhesive layer and the second adhesive layer are the adhesive films according to the present invention.

In an exemplary embodiment of the present invention, the polarizing film may be prepared by applying the UV adhesive composition on the polarizer and then bonding the polarizer and the transparent protective film using a roll laminator or the like.

Specifically, after the bonding, ultraviolet rays are irradiated to the polarizing plate in order to cure the adhesive composition. Although the light source of ultraviolet rays is not particularly limited, the light source may be used with a low pressure mercury lamp, a medium pressure mercury lamp, a high pressure mercury lamp, an ultra-high pressure mercury lamp, a chemical lamp, a black light lamp, a microwave excited mercury lamp, a metal halide lamp, etc., which have a luminescence distribution at a wavelength of 400 nm or less. Although the irradiation dose of ultraviolet rays (integrated light amount) is not particularly limited, it is preferable that the irradiation dose of ultraviolet rays in a wavelength range effective for activating the polymerization initiator is 100 mJ/cm² or more and 2,000 mJ/cm² or less. Within this range, the reaction time is appropriate, and it is possible to prevent deterioration of the adhesive layer itself or the polarizing film due to heat radiated from the lamp and heat generated during polymerization.

The polarizing film is stored at room temperature (20°C or more and 25°C or less, specifically 25°C) for 16 hours or more and 30 hours or less immediately after irradiation with ultraviolet rays. The polarizing film may be prepared by completion of curing.

In an exemplary embodiment of the present invention, the transparent protective film material is preferably a material having excellent transparency, mechanical strength, thermal stability, a water barrier property, isotropy, and the like. For example, the transparent protective film material may include cellulose resins such as cellulose diacetate and cellulose triacetate, polyester resins such as polyethylene terephthalate and polyethylene naphthalate, acrylic resins such as polymethyl methacrylate (PMMA), polystyrene resins such as polystyrene and acrylonitrile-styrene copolymer (AS resin), polycarbonate resin, polyolefin resins such as polyethylene, polypropylene, ethylene/propylene copolymer, and cycloolefin polymer, polyvinyl chloride resin, polyamide resin such as nylon or aromatic polyamide, polyimide resin, polysulfone resin, polyethersulfone resin, polyether ether ketone resin, polyphenylene sulfide resin, polyvinyl alcohol resin, polyvinylidene chloride resin, polyvinyl butyral resin, polyarylate resin, polyoxymethylene resin, epoxy resin, or blend products of these resins, etc.

In an exemplary embodiment of the present invention, examples of the cellulose resin may include cellulose triacetate (TAC), cellulose diacetate, cellulose tripropionate, cellulose dipropionate, and the like. Among them, in terms of ease of availability or cost, cellulose triacetate, cycloolefin polymer, polyethylene terephthalate, or acrylic resin is preferable, and in terms of ease of availability and moisture permeability, cycloolefin polymer, polyethylene terephthalates, or acrylic resins is more preferable. If the moisture permeability of the protective film is high, the moisture penetrates into the protective film to be easily introduced to the polarizer side, which may cause the quality of the polarizer to be deteriorated.

The polarizer exhibits a characteristic capable of extracting only light vibrating in one direction from incident light while vibrating in several directions. Such a characteristic may be achieved by stretching poly vinyl alcohol (PVA) absorbed with iodine with strong tension. For example, more specifically, the polarizer may be formed by a swelling step of immersing and swelling a PVA film in an aqueous solution, a step of dyeing the swollen PVA film with a dichroic material that imparts polarization, a stretching step of stretching the dyed PVA film to arrange the dichroic dye material side by side in the stretching direction, and a complementing step of correcting the color of the PVA film through the stretching step. However, the polarizing plate of the present invention is not limited thereto.

The polarizer may use a polarizer well-known in the art, for example, a film made of polyvinyl alcohol (PVA) containing iodine or a dichroic dye. The polarizer may be manufactured by dyeing a polyvinyl alcohol-based film with iodine or a dichroic dye, but a manufacturing method thereof is not particularly limited. A polarizing film means a state including the polarizer and the protective film.

The polarizer is manufactured by steps of uniaxially stretching a polyvinyl alcohol-based resin film, dyeing the polyvinyl alcohol-based resin film with a dichroic dye and adsorbing the dichroic dye, treating the polyvinyl alcohol-based resin film adsorbed with the dichroic dye with an aqueous solution of boric acid, washing the polyvinyl alcohol-based resin film with water after treatment with a boric acid aqueous solution, and bonding a protective film to the uniaxially stretched polyvinyl alcohol-based resin film with the dichroic dye adsorbed and oriented through these steps.

The uniaxial stretching may be performed before dyeing with the dichroic dye, performed simultaneously with dyeing with the dichroic dye, or performed after dyeing with the dichroic dye. When the uniaxial stretching is performed after dyeing with the dichroic dye, the uniaxial stretching may also be performed before treatment of boric acid or may be performed during treatment of boric acid. In addition, it is also possible to perform the uniaxial stretching in these multiple steps. In order to perform the uniaxial stretching, uniaxial stretching may be performed between rolls having different peripheral speeds, or uniaxial stretching may be performed using hot rolls. Further, the uniaxial stretching may also be dry stretching of performing stretching in the air or wet stretching of performing stretching in a state swollen with a solvent. The stretching ratio is not particularly limited, but is usually 4 to 8 times.

Meanwhile, the polarizer has a thickness of preferably 5 µm to 40 µm, more preferably 5 µm to 25 µm. When the thickness of the polarizer satisfies the numerical range, the optical properties are excellent and a polarizer shrinkage amount is appropriate in a low temperature state to have excellent durability related to heat of the entire polarizing plate.

In addition, when the polarizer is a polyvinyl alcohol-based film, the polyvinyl alcohol-based film can be used without particular limitation as long as the polyvinyl alcohol-based film includes a polyvinyl alcohol resin or derivatives thereof. In this case, the derivatives of the polyvinyl alcohol resin include a polyvinyl formal resin, a polyvinyl acetal resin, etc., but are not limited thereto. In addition, commercially available polyvinyl alcohol-based films, such as P30, PE30, and PE60 from Kuraray and M2000, M3000, and M6000 from Nihon Synthetic Co. Ltd., may be used, but are not limited thereto.

The polyvinyl alcohol-based film has a polymerization degree of preferably 1,000 to 10,000, more preferably 1,500 to 5,000. When the polymerization degree satisfies the numerical range, the molecules freely move and may be flexibly mixed with iodine or the dichroic dye.

In an exemplary embodiment of the present invention, there is provided the polarizing film in which adhesive strength between the surface in contact with the polarizer of the first adhesive layer; and the surface in contact with the polarizer of the second adhesive layer is 150 gf/inch or more.

In another exemplary embodiment of the present invention, there is provided the polarizing film in which adhesive strength between the surface in contact with the polarizer of the first adhesive layer; and the surface in contact with the polarizer of the second adhesive layer is 150 gf/inch or more, preferably 200 gf/inch or more and 600 gf/inch or less, more preferably 400 gf/inch or less.

The unit of the adhesive strength uses gf/inch, but may mean the same unit as gf/20 mm or gf/25 mm.

That is, in the polarizing film according to the present invention, a first protective film is used above the polarizer and a second protective film is used below the polarizer, and even in the case of using the moisture-impermeable substrate above and the moisture-permeable substrate below, the UV curing adhesive composition has predetermined composition and content to have the excellent adhesive strength as described above.

FIG. 1 illustrates a stacked structure of the polarizing film according to an exemplary embodiment of the present invention. Specifically, it can be seen that a first adhesive layer 4 and a second adhesive layer 2 are provided on both surfaces of a polarizer 3, and a transparent protective film 5 with moisture permeability of 150 g/m²•24h or less and a transparent protective film 1 with moisture permeability of 150 g/m² •24h or more are provided above the first adhesive layer 4 and the second adhesive layer 2, respectively.

FIG. 1 is only one example, and the type of protective substrate that may be disposed above and below the polarizer is not limited thereto.

In an exemplary embodiment of the present invention, there is provided the polarizing film in which the first adhesive layer and the second adhesive layer are the same as each other.

That is, even though the moisture-permeable substrate and the moisture-impermeable substrate are simultaneously used in the polarizer, unlike existing methods which have been used by changing various types of adhesives, since the same type of adhesive layer is used, it is characterized that productivity of the polarizing film is excellent and cost increase due to replacement of the adhesive can be prevented.

The adhesive composition for the polarizing plate according to the present invention may be appropriately used for a polarizing plate (polarizing film), a retardation film, an elliptically polarizing film, an antireflection film, a brightness enhancement film, an indium· tin oxide sputtering transparent conductive film (ITO film), various electronics-related film members or protective films, or the like. Even among them, the adhesive composition for the polarizing plate is preferably used for the polarizing plate (polarizing film).

Finally, there is provided a display device comprising the polarizing film according to the present invention.

### [Modes for the Invention]

Hereinafter, the present invention will be described in detail through Examples according to the present invention and Comparative Examples not according to the present invention, but the scope of the present invention is not limited by the following Examples.

### <Experimental Example>

UV adhesive compositions having compositions and contents shown in Table 1 were prepared, respectively.

Then, the UV adhesive composition was applied to both surfaces of a polarizer (manufactured by Nippon Synthetic Co., Ltd.), and an NRT TAC film (moisture permeability > 200 g/m² day) from Fuji Co., Ltd. on one surface and PET (moisture permeability < 50 g/m² day) from Toyobo Co., Ltd. on the opposite surface were stacked and then bonded through a roll laminator.

Thereafter, ultraviolet rays were irradiated to a polarizing plate in order to cure the UV adhesive composition. Although a light source of ultraviolet rays was not particularly limited, the light source may be used with a low pressure mercury lamp, a medium pressure mercury lamp, a high pressure mercury lamp, an ultra-high pressure mercury lamp, a chemical lamp, a black light lamp, a microwave excited mercury lamp, a metal halide lamp, etc., which have a luminescence distribution at a wavelength of 400 nm or less.

The adhesive composition for the polarizing plate was cured by irradiating ultraviolet rays with a wavelength of 365 nm so that the irradiation dose (integrated light amount) was 2000 mJ/cm², and then the polarizer and a protective film for peeling were bonded to each other and cut to a size of 2 cm width x 15 cm length to prepare a polarizing plate sample. At this time, the protective film for peeling with respect to each adhesive composition for the polarizing plate was subjected to KOH pretreatment.

The polarizing film was stored at room temperature (20°C or more and 25°C or less, specifically 25°C) for 16 hours or more and 30 hours or less immediately after irradiation with ultraviolet rays. The polarizing film was obtained by completion of curing.

**[Table 1]**

| | Monofunct ional acrylate | Polyfuncti onal acrylate | | Silane coupling agent | | | Cationic initiator | Photos ensiti zer | Radical initiator |
|---|---|---|---|---|---|---|---|---|---|
| | 4-HBA | M210 | M370 | KBM - 403 | KBM-503 | KBM-5103 | Omnicat 250 | DETX | - |
| Example 1 | 16 | 50 | 16 | 15 | - | - | 2 | 2 | - |
| Example 2 | 16 | 50 | 16 | 15 | - | - | 2 | 2 | 1.5 |
| Example 3 | 15 | 65 | 20 | 30 | - | - | 2 | 2 | - |
| Example 4 | 15 | 55 | 20 | 25 | - | - | 2 | 2 | - |
| Example 5 | 15 | 50 | 20 | 15 | - | - | 2 | 2 | - |
| Example 6 | 16 | DPGD | 16 | 15 | - | - | 2 | 2 | - |
| | | A:50 | | | | | | | |
| Example 7 | 16 | 52 | 14 | 15 | - | - | 2 | 2 | - |
| Comparative Example 1 | - | 66 | 16 | 16 | | | 2 | 2 | - |
| Comparative Example 2 | 84 | - | - | 16 | - | - | 2 | 2 | - |
| Comparative Example 3 | 16 | 50 | 16 | 15 | - | - | 2 | - | - |
| Comparative Example 4 | 16 | 50 | 16 | 15 | - | - | - | 2 | - |
| Comparative Example 5 | 28 | 28 | 20 | - | 40 | - | 2 | 2 | - |
| Comparative Example 6 | 28 | 28 | 20 | - | - | 40 | 2 | 2 | - |
| Comparative Example 7 | 15 | 45 | 20 | 10 | - | - | 2 | 2 | - |
| Comparative Example 8 | 15 | 40 | 20 | 5 | - | - | 2 | 2 | - |
| Comparative | 16 | 46 | 20 | 15 | - | - | 2 | 2 | - |
| Example 9 | | | | | | | | | |
| Comparative Example 10 | 16 | - | 66 | 15 | - | - | 2 | 2 | - |

In Table 1 above, the numbers may mean the content part included in the entire adhesive composition (six types of Table 1). In addition, DPGDA:50 in Example 6 means using 50 parts by weight of DPGDA instead of using M210. Specifically, the numbers in Table 1 above indicated respective content parts based on 100 parts by weight of a monomer including monofunctional acrylate, polyfunctional acrylate and a silane coupling agent, and the cationic initiator, the photosensitizer, and the radical initiator were indicated by parts by content included based on 100 parts by weight of the entire adhesive composition, respectively.

At this time, other additives may be further included in the monomer, and the parts by content of the additives were not included in Table 1 above.

In Table 1 above, DPGDA was dipropylene glycol diacrylate, 4-HBA (OSAKA Chemical Co., Ltd.) was 4-hydroxybutyl acrylate, M210 (Miwon Chemical Co., Ltd.) was Hydroxypivalic Acid Neopentylglycol Diacrylate, M370 (Miwon Chemical Co., Ltd.) was tris(2-hydroxyethyl) isocyanurate triacrylate, KBM-403 (ShinEtsu Chemical Co., Ltd.) was 3-glycidoxypropyl trimethoxysilane, a material having epoxy groups and at least one alicyclic epoxy group of the epoxy groups, KBM-503 (ShinEtsu Chemical Co., Ltd.) was 3-metahydroxypropyl trimethoxy silane, a material without having an epoxy group, KBM-5103 ShinEtsu Chemical Co., Ltd.) was acryloxypropyl trimethoxysilane, a material without having an epoxy group, Omnicat 250 was (4-methylphenyl)[4-(2-methylpropyl)phenyl]-hexafluorophosphate(1-)in propylene carbonate, and DETX (IHT Co., Ltd.) was 2,4-diethylthioxanthone, respectively.

With respect to the polarizing film prepared above, the following Experimental Examples 1 to 4 were evaluated, and the results were shown in Table 2.

**[Table 2]**

| | Peel strength | | Thermal shock resistance | Curing rate | Substrate wetting property |
|---|---|---|---|---|---|
| | Protective substrate (1) | Protective substrate (2) | - 40°C <-> 85°C | - | - |
| | TAC (NRT) | PET (TAO44) | 100 Cycle | - | - |
| Example 1 | ⊚ | ⊚ | ⊚ | ⊚ | ⊚ |
| Example 2 | ⊚ | ⊚ | ⊚ | ⊚ | ⊚ |
| Example 3 | ⊚ | ⊚ | ⊚ | ⊚ | ⊚ |
| Example 4 | ⊚ | ⊚ | ⊚ | ⊚ | ⊚ |
| Example 5 | ⊚ | ⊚ | ⊚ | ⊚ | ⊚ |
| Example 6 | ○ | ⊚ | ⊚ | ⊚ | ⊚ |
| Example 7 | ⊚ | ⊚ | ⊚ | ⊚ | ⊚ |
| Comparative Example 1 | X | X | X | ⊚ | ⊚ |
| Comparative Example 2 | X | X | X | X | ⊚ |
| Comparative Example 3 | X | X | X | X | ⊚ |
| Comparative Example 4 | X | X | X | X | ⊚ |
| Comparative Example 5 | X | X | X | ⊚ | ⊚ |
| Comparative Example 6 | X | X | X | ⊚ | ⊚ |
| Comparative Example 7 | X | X | ○ | ⊚ | ⊚ |
| Comparative Example 8 | X | X | ○ | ⊚ | ⊚ |
| Comparative Example 9 | ○ | ○ | ○ | ⊚ | ⊚ |
| Comparative Example 10 | X | X | ○ | ⊚ | ⊚ |

### <Experimental Example 1: Peel strength test of protective film>

A protective film for peeling was peeled at 3 cm or more at a peeling rate of 0.5 cm/sec, and the peel strength at this time was measured three times to calculate an average value. The peel strength was measured using an XT Plus Texture Analyzer (manufactured by TA).

At this time, the peel strength (gf/20 mm) was evaluated as ⊚ in the case of 200 gf/20 mm or more, o in the case of 120 gf/20 mm or more and less than 200 gf/20 mm, Δ in the case of 100 gf/20 mm or more and less than 120 gf/20 mm, and X in the case of less than 100 gf/20 mm, respectively.

### <Experimental Example 2: Evaluation of thermal shock resistance>

The prepared polarizing film was cut to have lengths of 150 mm in an absorption axial direction and in a direction perpendicular thereto, respectively. Thereafter, an adhesive was applied to one surface of the protective film for peeling, and laminated on a glass substrate and left at 25°C for 24 hours.

Thereafter, the glass substrate was left at - 40°C for 30 minutes and left at 85°C for 30 minutes and 100 cycles were repeated. After the thermal shock was applied, it was observed whether polarizer cracks existed from the end of the polarizing plate in a stretching direction of the polarizer, and when the polarizer cracks were observed, the lengths of the cracks were measured. When a plurality of cracks was observed, the thermal shock resistance was evaluated using an average value thereof.

The thermal shock resistance was evaluated as ⊚ when there was no crack or the lengths of the cracks were less than 1 mm, o when the lengths of the cracks were about 10 mm, Δ when the lengths of the cracks were about 50 mm, and X when string cracks occurred in bundles, respectively.

### <Experimental Example 3: Curing rate>

The adhesive composition for the polarizing plate was cured by irradiating ultraviolet rays having a wavelength of 365 nm so that the irradiation dose (integrated light amount) was 2000 mJ/cm². Immediately after peeling off the protective film, the cured film was rubbed by hand to check whether the film was slipped.

The curing rate was evaluated as ⊚ in the case of less than 10 seconds, o in the case of more than 10 seconds and less than 20 seconds, Δ, in the case of more than 20 seconds and less than 50 seconds, and X in the case of more than 50 seconds, respectively.

### <Experimental Example 4: Substrate wetting property>

A protective film (TAC film) was fixed and then applied with an adhesive composition using #3 Bar. After 30 seconds, it was confirmed whether dewetting occurred on the film surface.

An excellent wetting property on the substrate was evaluated as ⊚, and side shrinkage and circular dewetting were evaluated as X.

As can be seen in Table 2 above, the UV curing adhesive composition (Examples 1 to 7) according to the exemplary embodiment of the present invention necessarily includes monofunctional acrylate; polyfunctional acrylate; a silane coupling agent; a cationic initiator; and a photosensitizer. Particularly, based on 100 parts by weight of the adhesive composition, the silane coupling agent is included in an amount of 15 parts by weight or more, the silane coupling agent has one or more epoxy groups in a molecule, and at least one of the epoxy groups includes an alicyclic epoxy group; or a non-alicyclic epoxy group to exhibit excellent adhesive strength regardless of a moisture-permeable or moisture-impermeable substrate to be attached.

As can be seen in the Examples of Table 2 above, it was confirmed that Examples 1 to 7, in particular, having non-alicyclic epoxy groups exhibited very excellent results in evaluation on peel strength and thermal shock resistance. This is because the non-alicyclic epoxy group is more excellent than the case of using an alicyclic epoxy group in the initial feasibility evaluation.

Moreover, as can be seen in Examples 1 to 7, it could be confirmed that the included polyfunctional acrylate included two types of acrylates, and acrylate having two functional groups thereof included a specific content and a specific functional group, thereby improving a wetting property of the polarizing plate or substrate and having excellent adhesive strength regardless of a protective substrate used.

For reference, Examples 1 to 5 and 7 correspond to cases where the acrylate having two functional groups includes a hydroxypivalic acid group, and Example 6 corresponds to a case without the hydroxypivalic acid group. In this case, there is a slight difference, but it can be seen that there is a difference in adhesive strength to the TAC (NRT) substrate. That is, it was confirmed that when the acrylate having two functional groups includes the hydroxypivalic acid group, the properties according to the present invention were very excellent.

It was confirmed that the UV curing adhesive composition according to the exemplary embodiment of the present invention includes monofunctional acrylate and polyfunctional acrylate at a specific content to lower the surface energy of an adhesive layer including the composition and have an excellent wetting property on the polarizing plate or substrate without causing bubbles in the process, thereby having excellent appearance quality of the polarizing film including the composition.

Comparative Examples 1 to 4 of Table 2 above corresponded to cases in which the monofunctional acrylate, the polyfunctional acrylate, the cationic initiator, or the photosensitizer were not included, respectively, and as can be seen from the experimental results, it was confirmed that the adhesive strength was not good and the evaluation of the thermal shock resistance was not good.

Comparative Examples 5 and 6 of Table 2 above included the silane coupling agent, but did not have epoxy groups as a functional group, and it was confirmed that the evaluation of peel strength and thermal shock resistance was also poor.

In addition to the role of a general coupling agent, the silane coupling agent according to the present invention also serves as an additive for increasing the adhesive strength of the composition, but Comparative Examples 7 and 8 corresponded to the cases where the silane coupling agent was included in an amount of less than 15 parts by weight based on 100 parts by weight of the monomer, and thus it was confirmed that the adhesive strength was not good compared to Examples.

In Comparative Example 9, the acrylate having two functional groups (bifunctional group) was less than the range according to the present invention, and in Comparative Example 10, the acrylate having two functional groups (bifunctional group) was not used. In the case of Comparative Example 9, the adhesive strength was measured higher than that of other Comparative Examples, but it was confirmed that the adhesive strength was still poor compared to Examples. In addition, Comparative Example 10 corresponded to a case in which one type of polyfunctional acrylate was included. In this case, it was confirmed that the evaluation of peel strength and thermal shock resistance was also not good, like other Comparative Examples.

## Claims

1. A UV curing adhesive composition comprising monofunctional acrylate; polyfunctional acrylate; a silane coupling agent; a cationic initiator; and a photosensitizer,
wherein based on 100 parts by weight of a monomer comprising the monofunctional acrylate; the polyfunctional acrylate; and the silane coupling agent, the silane coupling agent is included in an amount of 15 parts by weight or more, and
the polyfunctional acrylate comprises acrylate having two functional groups; and acrylate having three or more functional groups,
wherein based on 100 parts by weight of the polyfunctional acrylate, the acrylate having two functional groups is included in an amount of 70 parts by weight or more, and
the silane coupling agent has one or more epoxy groups in a molecule, wherein at least one of the epoxy groups is an alicyclic epoxy group; or a non-alicyclic epoxy group.

2. The UV curing adhesive composition of claim 1, wherein based on 100 parts by weight of the monomer, 1 part by weight or more and 30 parts by weight or less of the monofunctional acrylate is included and 40 parts by weight or more and 90 parts by weight or less of the polyfunctional acrylate is included.

3. The UV curing adhesive composition of claim 1, wherein based on 100 parts by weigh of the UV curing adhesive composition, the cationic initiator is included in an amount of 0.1 part by weight or more and 5 parts by weight or less and the photosensitizer is included in an amount of 0.1 part by weight or more and 5 parts by weight or less.

4. The UV curing adhesive composition of claim 1, wherein the functional groups of the monofunctional acrylate and the polyfunctional acrylate are acrylate groups.

5. The UV curing adhesive composition of claim 1, wherein 70 parts by weight or more and 80 parts by weight or less of the acrylate having two functional groups is included based on 100 parts by weight of the polyfunctional acrylate.

6. The UV curing adhesive composition of claim 1, wherein the acrylate having two functional groups comprises a hydroxypivalic acid group.

7. An adhesive film comprising the UV curing adhesive composition of any one of claims 1 to 6 or a curing product thereof.

8. The adhesive film of claim 7, further comprising:
a release film on one surface or both surfaces of the adhesive film.

9. The adhesive film of claim 7, wherein the adhesive film has a thickness of 0.1 µm or more and 300 µm or less.

10. A polarizing film comprising:
a polarizer;
a first adhesive layer and a second adhesive layer provided on both surfaces of the polarizer;
a transparent protective film provided on an opposite surface to a surface in contact with the polarizer of the first adhesive layer and having moisture permeability of 150 g/m²•24h or less; and
a transparent protective film provided on an opposite surface to a surface in contact with the polarizer of the second adhesive layer and having moisture permeability of 150 g/m²•24h or more,
wherein the first adhesive layer and the second adhesive layer are the adhesive films according to claim 7.

11. The polarizing film of claim 10, wherein the adhesive strength between the surface in contact with the polarizer of the first adhesive layer; and the surface in contact with the polarizer of the second adhesive layer is 150 gf/inch or more.

12. The polarizing film of claim 10, wherein the first adhesive layer and the second adhesive layer are the same as each other.

13. A display device comprising the polarizing film according to claim 10.
